# EUROPÄISCHE PATENTSCHRIFT

(11) **EP 3 341 807 B1**
(45) Veröffentlichungstag und Bekanntmachung des Hinweises auf die Patenterteilung: **01.05.2019**
(21) Anmeldenummer: 16742319.3
(22) Anmeldetag: 26.07.2016
(51) Int. Cl.: G05B 23/02

(54) **VERFAHREN UND SYSTEM ZUR INSTANDHALTUNG VON FELDGERÄTEN IN EINER ANLAGE DER AUTOMATISIERUNGSTECHNIK**
METHOD AND SYSTEM FOR MAINTAINING FIELD DEVICES IN AN AUTOMATION PLANT
PROCÉDÉ ET SYSTÈME DE MAINTENANCE DE DISPOSITIFS DE TERRAIN DANS UNE INSTALLATION D'AUTOMATISATION

(30) Priorität: 24.08.2015 DE 102015113981
(43) Veröffentlichungstag der Anmeldung: 04.07.2018
(73) Patentinhaber: Endress+Hauser Process Solutions AG, 4153 Reinach (CH)
(72) Erfinder: BARET, Marc, 68680 Kembs (FR); HAUSS, Georg, 79102 Freiburg (DE); KAISER, Ulrich, 4057 Basel (CH); MANEVAL, Michael, 79650 Schopfheim (DE); NICK, Markus, 68680 Kembs (DE)
(74) Vertreter: Andres, Angelika Maria
(86) Internationale Anmeldenummer: PCT/EP2016/067752
(87) Internationale Veröffentlichungsnummer: WO 2017/032530

(56) Entgegenhaltungen:
- WO-A2-03/075206

## Beschreibung

Die Erfindung betrifft ein Verfahren und ein System zur Instandhaltung von zumindest einem einer Vielzahl von Feldgeräten in einer Anlage der Automatisierungstechnik, welches zumindest eine Vielzahl von Feldgeräten, eine Datenbank zum Speichern von den jeweiligen Gerätetypen der Vielzahl der Feldgeräte, von Diagnosemeldungen der Vielzahl der Feldgeräte, von Fehlerbildern, von in der Vergangenheit applizierten Maßnahmen zur Behebung eines aufgetretenen Fehlers und von Erfolgsbewertungen für die jeweiligen gespeicherten Maßnahmen, und eine Recheneinheit, die auf die Datenbank zugreift und dort Daten auslesen, speichern und/oder zuordnen kann, sowie Erfolgsbewertungen erstellt und neue Diagnosemeldungen mit den in der Datenbank gespeicherten Fehlerbildern vergleicht und einen Vorschlag einer dazu passenden Maßnahme und deren Erfolgsbewertung anzeigt, umfasst.

Aus dem Stand der Technik sind bereits Feldgeräte bekannt geworden, die in industriellen Anlagen zum Einsatz kommen. In der Automatisierungstechnik, insbesondere der Prozessautomatisierung und der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Ein Ausfall eines solchen Feldgeräts ist mit hohen Kosten und mitunter einem immensen Zeitaufwand verbunden. Abhängig von der Applikation des ausgefallenen Feldgeräts muss der gesamte Prozess der Anlage, in die das Feldgerät eingebaut ist, unterbrochen werden, das Feldgerät ausgebaut und gewartet werden, und anschließend erneut in die Anlage eingebaut werden.

Ein Feldgerät, welches eine Fehlfunktion, beispielweise von der Norm abweichende Messwerte, erkennt, sendet selbstständig Diagnosemeldungen an das Anlagensystem. Für einen Anlagenbetreiber ist es mitunter jedoch schwierig, aufgrund dieser Diagnosemeldungen geeignete Maßnahmen zu ergreifen, die zu einer schnellen und zuverlässigen Problembehebung führen.

Zur Problemidentifizierung und/oder zur Problembehebung hinzugerufene Instandhaltungsexperten verursachen einen zusätzlichen Zeit- und Kostenaufwand. Mitunter benötigen diese auch Instandhaltungsexperten einen langen Zeitraum, um eine geeignete Maßnahme auszuwählen, da jede Diagnosemeldung individuell bewertet und analysiert werden muss, auf Basis der individuellen Erfahrung des hinzugerufenen Instandhaltungsexperten.

Die WO 03/075206 A2 offenbart ein Verfahren zur Verarbeitung von Informationen in Bezug auf den Betriebsstatus einzelner Prozesseinheiten in einer Prozessanlage. Die Betriebsstatusinformation wird in eine von mehreren Statuszuständen abgebildet. Daraufhin wird eine der jeweiligen Prozesseinheit zugeordnete Alarmnachricht erzeugt, welche den Statuszustand der Prozesseinheit enthält.

Ausgehend von dieser oben beschriebenen Problematik liegt der Erfindung die Aufgabe zugrunde, ein Verfahren und ein System vorzustellen, das es erlaubt, einen Fehler an einem Feldgerät schnell und effizient zu beheben.

Die Aufgabe wird durch ein Verfahren zur Instandhaltung von zumindest einem einer Vielzahl von Feldgeräten in einer Anlage der Prozessautomatisierung gelöst, welches die folgenden Schritte umfasst:
- Erfassen von zumindest einer Prozessstelle der Anlage in einer Datenbank;
- Zuordnen einer Prozessapplikation zu der Prozessstelle in der Datenbank;
- Erfassen von an der Prozessstelle zugeordneten jeweiligen Gerätetypen der Vielzahl der Feldgeräte und Speichern der Gerätetypen in der Datenbank;
- Erfassen von Diagnosemeldungen der Vielzahl der Feldgeräte, Zuordnen der Diagnosemeldungen zu den jeweiligen Gerätetypen und Speichern der Diagnosemeldungen in der Datenbank;
- Erstellen von Fehlerbildern aus den gespeicherten Diagnosemeldungen, welche eine Korrelation von verschiedenen der gespeicherten Diagnosemeldungen zu einem aufgetretenen Fehler darstellen und Speichern der Fehlerbilder in der Datenbank;
- Erheben von applizierten Maßnahmen zur Behebung des aufgetretenen Fehlers, Zuordnen der applizierten Maßnahmen zu den jeweiligen Fehlerbildern und Speichern der applizierten Maßnahmen in der Datenbank;
- Erstellen von Erfolgsbewertungen für die jeweiligen gespeicherten applizierten Maßnahmen, wobei eine Erfolgsbewertung ein Maß für die Effektivität der jeweiligen gespeicherten applizierten Maßnahme darstellt;
- Beim Auftreten von zumindest einer neu auftretenden Diagnosemeldung von zumindest einem der Vielzahl der Feldgeräte erfolgt ein Vergleich mit den in der Datenbank gespeicherten Fehlerbildern und Anzeige eines Vorschlags von zumindest einer dazu passenden Maßnahme und deren Erfolgsbewertung falls eines oder mehrere der Fehlerbilder die neu aufgetretene Diagnosemeldung enthält.

Als Prozessstelle wird ein Teil der Anlage der Automatisierungstechnik bezeichnet, in der ein bestimmter Prozess ausgeführt wird. Eine Prozessstelle kann eine oder mehrere Applikationen beinhalten. Als Prozessapplikation wird hier eine Anwendung innerhalb der Prozessstelle bezeichnet, beispielsweise Durchflussmessung eines Mediums.

Der Vorteil des erfindungsgemäßen Verfahrens liegt darin, dass durch die Vielzahl der Feldgeräte und den von diesen erhobenen Daten ein großer Erfahrungsschatz bezüglich der vorzunehmenden Maßnahmen bei einem Auftreten von Diagnosemeldungen erstellt wird. Das Verfahren ermöglicht dadurch erfahrungsbasierte Entscheidungshilfen für das Auftreten von Diagnosemeldungen und den daraus abgeleiteten Fehlerbildern. Dadurch wird eine zeitaufwendige Analyse des betroffenen Feldgeräts und/oder der gesamten dazugehörigen Anlage durch einen Instandhaltungsexperten vermieden. Außerdem wird der Erfahrungsschatz und die Handlungsmöglichkeit zentralisiert zugänglich gemacht und steht nicht, wie bisher, lediglich vereinzelten Instandhaltungsexperten zur Verfügung.

Des Weiteren wird das Ausfallrisiko eines Feldgeräts und/oder der zugehörigen Anlage durch zeitnahe Behebung eines aufgetretenen Problems reduziert.

Nicht jedes Fehlerbild muss jedoch auch kritisch sein. Durch die gespeicherten Erfolgsbewertungen der applizierten Maßnahmen kann auch ersichtlich sein, dass bei bestimmten Diagnosemeldungen und den daraus erstellten Fehlerbildern keine Maßnahme notwendig ist. Dies verhindert einen eventuellen Ausbau eines vermeintlich Ausfallen zu drohenden Feldgeräts, wodurch Zeit und Kosten gespart werden.

Eine bevorzugte Variation des erfindungsgemäßen Verfahrens sieht vor, dass anhand des Vergleichs der neuen Diagnosemeldung mit den in der Datenbank gespeicherten Fehlerbildern ein möglicher Fehler vorhergesagt wird. Dadurch können auch Fehler vorhergesagt werden, die den Diagnosemeldungen nicht direkt entnehmbar sind, was somit zu einer schnellen und effektiven Problemlösung führt.

Eine besonders bevorzugte Ausgestaltung des erfindungsgemäßen Verfahrens sieht vor, dass zusätzlich ein wahrscheinlicher Zeitrahmen des Auftretens des möglichen Fehlers vorhergesagt wird.

So kann aus den gespeicherten Fehlerbildern beispielsweise ersichtlich sein, dass ein bestimmter Fehler an verschiedenen Feldgeräten desselben Feldgerätetyps beispielsweise wenige Tage nach Auftreten bestimmter Diagnosemeldungen auftrat. Somit liegt eine hohe Wahrscheinlichkeit vor, dass derselbe Fehler bei einem anderen Feldgerät desselben Feldgerätetyps, auch bei diesem Feldgerät innerhalb von wenigen Tagen nach Senden der bestimmten Diagnosemeldungen auftritt.

Eine Bewertung des weiteren zeitlichen Verlaufs des Fehlers erlaubt eine Planung der Fehlerbehebung, zum Beispiel der Terminierung auf einen nächsten Wartungszyklus, was einen oft unnötigen Anlagenstillstand vermeidet.

In einer vorteilhaften Weiterbildung des erfindungsgemäßen Verfahrens werden die Erfolgswahrscheinlichkeiten aller für ein jeweiliges Fehlerbild applizierten Maßnahmen ermittelt und aggregiert angezeigt. Dadurch wird die Qualität der Maßnahmen bewertet, womit es einem Anlagenbetreiber erleichtert wird, die Maßnahme auszuwählen, die den größten Erfolg verspricht.

Eine besonders bevorzugte Ausgestaltung des erfindungsgemäßen Verfahrens sieht vor, dass die Erfolgswahrscheinlichkeiten aller für ein jeweiliges Fehlerbild applizierten Maßnahmen für verschiedene Anlagenebenen, wie beispielsweise Anlagen der gleichen Applikation, jegliche Anlagen eines Kunden, Anlagen einer gleichen Applikation, Anlagen einer Industrie und/oder sämtliche verfügbare Anlagen, ermittelt und aggregiert angezeigt werden. Dadurch wird ein mitunter sehr großer Erfahrungsschatz aufgebaut, der das erfindungsgemäße Verfahren noch effizienter gestaltet.

In einer bevorzugten Variante des erfindungsgemäßen Verfahrens wendet das eine der Vielzahl der Feldgeräte die zur neu aufgetretenen Diagnosemeldung passende Maßnahme automatisch an.

Des Weiteren wird die Aufgabe durch ein System, das zur Durchführung des erfindungsgemäßen Verfahrens geeignet ist, gelöst, umfassend
- eine Vielzahl von Feldgeräten;
- eine Datenbank zum Speichern von den jeweiligen Gerätetypen der Vielzahl der Feldgeräte, von Diagnosemeldungen der Vielzahl der Feldgeräte, von Fehlerbildern, von in der Vergangenheit applizierten Maßnahmen zur Behebung eines aufgetretenen Fehlers und von Erfolgsbewertungen für die jeweiligen gespeicherten Maßnahmen;
- eine Recheneinheit, die auf die Datenbank zugreift und dort Daten auslesen, speichern und/oder zuordnen kann, sowie Erfolgsbewertungen erstellt und neue Diagnosemeldungen mit den in der Datenbank gespeicherten Fehlerbildern vergleicht und einen Vorschlag einer dazu passenden Maßnahme und deren Erfolgsbewertung anzeigt.

Eine besonders vorteilhafte Ausgestaltung des erfindungsgemäßen Systems sieht vor, dass die Datenbank mittels Cloud Computing WebServices erreichbar ist. Unter Cloud Computing wird in diesem Fall das Speichern von Daten in einem entfernten Rechenzentrum, in diesem Fall in einer entfernten Datenbank, beschrieben. Der Vorteil besteht darin, dass eine Zentralisierung der Datenbestände erfolgt, da jedes Feldgerät seine Daten in Form von Gerätetypen und Diagnosemeldungen auf diese Datenbank speichert.

Die Übermittlung der Daten der Vielzahl der Feldgeräte, im Speziellen die Gerätetypen und die Diagnosemeldungen, erfolgt über ein oder mehrere Netzwerke, an die die Vielzahl der Feldgeräte angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden, das beispielsweise über ein Gateway mit dem Internet verbunden ist..

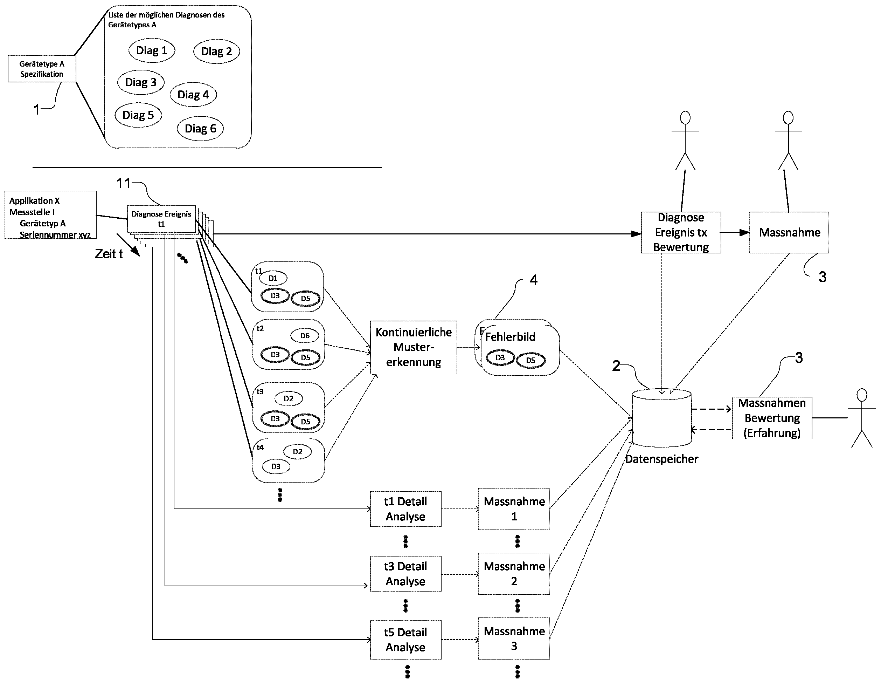

Die Erfindung wird anhand der nachfolgenden Figur näher erläutert. Es zeigt
Fig. 1: eine Ausgestaltung des erfindungsgemäßen Verfahrens zur Instandhaltung eines einer Vielzahl von Feldgeräten.

Fig. 1 zeigt eine Ausgestaltung des erfindungsgemäßen Verfahrens zur Instandhaltung eines einer Vielzahl von Feldgeräten F. In einer Datenbank 2 werden für eine bestimmte Automatisierungsapplikation und deren Prozessstellen die Gerätetypen 1 von jedem der Vielzahl der Feldgeräte F erfasst und gespeichert. Die Datenbank 2 befindet sich in einer Cloud, auf die die Vielzahl der Feldgeräte F zugreifen können. Die Übermittlung der Gerätetypen der Vielzahl der Feldgeräte F, im weiteren Verfahrensverlauf aber auch die Übermittlung der Diagnosemeldungen D₁, D₂, D₃, D₄, D₅, D₆, erfolgt über ein oder mehrere Netzwerke, an die die Vielzahl der Feldgeräte F angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden.

Nach dem Speichern der Gerätentypen 1 werden Diagnosemeldungen D₁, D₂, D₃, D₄, D₅, D₆ von jedem der Vielzahl der Feldgeräte F erfasst, dem jeweiligen Gerätetyp 1 zugeordnet und ebenfalls in der Datenbank 2 gespeichert.

Im Anschluss werden die auf der Datenbank 2 gespeicherten Daten, bestehend aus den zu den Gerätetypen 1 zugeordneten Diagnosemeldungen D₁, D₂, D₃, D₄, D₅, D₆ analysiert. In den in Fig. 1 gezeigten Ausführungsbeispiel ist die Achse t eine Zeitleiste, die das Auftreten von Diagnosemeldungen D₁, D₂, D₃, D₄, D₅, D₆ eines bestimmten Feldgerättyps 1 an einer Anlage darstellt. Die jeweils auftretenden Diagnosemeldungen D₁, D₂, D₃, D₄, D₅, D₆ werden analysiert, auf Muster untersucht und, wenn passend, in Fehlerbildern 4 zusammengefasst.

Darauf folgend werden bereits applizierte Maßnahmen M₁, M₂, M₃ erhoben, die zum Beheben des jeweiligen Fehlers appliziert wurden. Diese Maßnahmen werden ebenfalls in der Datenbank 2 gespeichert. Eine Recheneinheit erstellt Erfolgsbewertungen für die applizierten Maßnahmen M₁, M₂, M₃ wobei eine Erfolgsbewertung ein Maß für die Effektivität der jeweiligen gespeicherten applizierten Maßnahme (M₁, M₂, M₃) darstellt.

Tritt eine neue Diagnosemeldung Dₓ auf, so erfolgt ein Vergleich mit den in der Datenbank 2 gespeicherten Fehlerbildern 4. Ist zumindest eine Übereinstimmung gefunden worden, so wird diese dem Anlagenbetreiber 5 angezeigt 3. Der Anlagenbetreiber 5 erhält eine Information über eine passende Maßnahme Mₓ, die er zur Behebung des Problems durchführen kann und zusätzlich eine Erfolgsbewertung der passenden Maßnahme Mₓ.

Ein Beispiel für eine Diagnosemeldung Dₓ stellt eine Meldung eines Durchflussmessgeräts dar, die mitteilt, dass die gemessen Volumenströme über einen längeren Zeitraum stetig abnehmen. Eines oder mehrere Fehlerbilder 4 enthält diese Diagnosemeldung Dₓ und kommt dadurch für den Anlagenbetreiber in Frage. Eine Maßnahme Mₓ, die einem der Fehlerbilder zugeordnet ist, ist das Reinigen des Durchflussrohres. Eine Ausgestaltung des erfindungsgemäßen Verfahrens erlaubt eine Vorhersage auf den möglichen Fehler, in diesem Fall Bildung von Ablagerungen auf der Innenseite des Durchflussrohres.

In einer Ausgestaltung des erfindungsgemäßen Verfahrens werden die Erfolgswahrscheinlichkeiten aller für ein jeweiliges Fehlerbild (4) applizierten Maßnahmen (M₁, M₂, M₃) für die Anlage ermittelt und dem Anlagenbetreiber 5 aggregiert angezeigt. Mit Zustimmung eines Anlagenbetreibers können die in der Datenbank erfassten Informationen auch mit weiteren Informationen zusammengefasst werden. Dadurch können die erfahrungsbasierten Maßnahmenvorschläge zusätzlich erweitert werden, beispielsweise auf jegliche Anlagen des Anlagenbetreibers, jegliche Anlagen einer Industrie und/oder sämtliche verfügbare Anlagen, um einen möglichst großen Erfahrungsschatz zu erhalten.

### Bezugszeichenliste

- 1: Feldgerätetyp
- 2: Datenbank
- 3: Anzeige einer vorgeschlagenen Maßnahme
- 4: Fehlerbild
- D₁, D₂, D₃, D₄, D₅, D₆: Diagnosemeldungen
- Dₓ: neu aufgetretene Diagnosemeldung
- F: Feldgerät
- M₁, M₂, M₃: applizierte Maßnahmen
- Mₓ: zur neu aufgetretenen Diagnosemeldung passende Maßnahme
- t: Zeitachse

## Patentansprüche

1. Verfahren zur Instandhaltung von zumindest einem einer Vielzahl von Feldgeräten (F) in einer Anlage der Automatisierungstechnik, umfassend folgende Schritte:
- Erfassen von zumindest einer Prozessstelle der Anlage in einer Datenbank;
- Zuordnen einer Prozessapplikation zu der Prozessstelle in der Datenbank;
- Erfassen von an der Prozessstelle zugeordneten jeweiligen Gerätetypen (1) der Vielzahl der Feldgeräte (F) und Speichern der Gerätetypen in der Datenbank (2);
- Erfassen von Diagnosemeldungen (D₁, D₂, D₃, D₄, D₅, D₆) der Vielzahl der Feldgeräte (F), Zuordnen der Diagnosemeldungen (D₁, D₂, D₃, D₄, D₅, D₆) zu den jeweiligen Gerätetypen und Speichern der Diagnosemeldungen (D₁, D₂, D₃, D₄, D₅, D₆) in der Datenbank (2);
- Erstellen von Fehlerbildern (4) aus den gespeicherten Diagnosemeldungen (D₁, D₂, D₃, D₄, D₅, D₆), welche eine Korrelation von verschiedenen der gespeicherten Diagnosemeldungen (D₁, D₂, D₃, D₄, D₅, D₆) zu einem aufgetretenen Fehler darstellen und Speichern der Fehlerbilder (4) in der Datenbank (2);
- Erheben von applizierten Maßnahmen (M₁, M₂, M₃) zur Behebung des aufgetretenen Fehlers, Zuordnen der applizierten Maßnahmen(M₁, M₂, M₃) zu den jeweiligen Fehlerbildern (4) und Speichern der applizierten Maßnahmen in der Datenbank (2);
- Erstellen von Erfolgsbewertungen für die jeweiligen gespeicherten applizierten Maßnahmen (M₁, M₂, M₃), wobei eine Erfolgsbewertung ein Maß für die Effektivität der jeweiligen gespeicherten applizierten Maßnahme (M₁, M₂, M₃) darstellt;
- Beim Auftreten von zumindest einer neu auftretenden Diagnosemeldung (Dₓ) von zumindest einem der Vielzahl der Feldgeräte (F) erfolgt ein Vergleich mit den in der Datenbank (2) gespeicherten Fehlerbildern (4) und Anzeige eines Vorschlags (3) von zumindest einer dazu passenden Maßnahme (Mₓ) und deren Erfolgsbewertung falls eines oder mehrere der Fehlerbilder die neu aufgetretene Diagnosemeldung (Dₓ) enthält.

2. Verfahren nach Anspruch 1, wobei anhand des Vergleichs der neuen Diagnosemeldung (Dₓ) mit den in der Datenbank (2) gespeicherten Fehlerbildern ein möglicher Fehler vorhergesagt wird.

3. Verfahren nach Anspruch 2, wobei zusätzlich ein wahrscheinlicher Zeitrahmen des Auftretens des möglichen Fehlers vorhergesagt wird.

4. Verfahren nach einem der vorherigen Ansprüche, wobei die Erfolgswahrscheinlichkeiten aller für ein jeweiliges Fehlerbild (4) applizierten Maßnahmen (M₁, M₂, M₃) ermittelt und aggregiert angezeigt werden.

5. Verfahren nach Anspruch 4, wobei die Erfolgswahrscheinlichkeiten aller für ein jeweiliges Fehlerbild (4) applizierten Maßnahmen (M₁, M₂, M₃) für verschiedene Anlagenebenen, wie beispielsweise Anlagen der gleichen Applikation, jegliche Anlagen eines Kunden, Anlagen einer gleichen Applikation, Anlagen einer Industrie und/oder sämtliche verfügbare Anlagen, ermittelt und aggregiert angezeigt werden.

6. Verfahren nach einem der vorherigen Ansprüche, wobei das eine der Vielzahl der Feldgeräte die zur neu aufgetretenen Diagnosemeldung (Dₓ) passende Maßnahme (Mₓ) automatisch anwendet.

7. System, das zur Durchführung des Verfahrens nach einem der Ansprüche1 bis 6 eingerichtet ist, umfassend
- eine Vielzahl von Feldgeräten (F);
- eine Datenbank (2) zum Speichern von den jeweiligen Gerätetypen (1) der Vielzahl der Feldgeräte (F), von Diagnosemeldungen (D₁, D₂, D₃, D₄, D₅, D₆) der Vielzahl der Feldgeräte (F), von Fehlerbildern (4), von in der Vergangenheit applizierten Maßnahmen (M₁, M₂, M₃) zur Behebung eines aufgetretenen Fehlers und von Erfolgsbewertungen für die jeweiligen gespeicherten applizierten Maßnahmen (M₁, M₂, M₃);
- eine Recheneinheit, die auf die Datenbank (2) zugreift und dort Daten auslesen, speichern und/oder zuordnen kann, sowie Erfolgsbewertungen erstellt und neue Diagnosemeldungen (Dₓ) mit den in der Datenbank (2) gespeicherten Fehlerbildern vergleicht und einen Vorschlag einer dazu passenden Maßnahme (Mₓ) und deren Erfolgsbewertung anzeigt.

8. System nach Anspruch 7, wobei die Datenbank (2) mittels Cloud Computing WebServices erreichbar ist.

## Claims

1. Procedure for the maintenance of at least one of a number of field devices (F) in an automation technology system, said procedure comprising the following steps:
- Recording of at least one process point of the system in a database;
- Assignment of a process application to the process point in the database;
- Recording of device types (1) assigned to the process point among the variety of field devices (F) and saving of the device types in the database (2);
- Recording of diagnostic messages (D₁, D₂, D₃, D₄, D₅, D₆) of the variety of field devices (F), assignment of the diagnostic messages (D₁, D₂, D₃, D₄, D₅, D₆) to the individual device types and saving of the diagnostic messages (D₁, D₂, D₃, D₄, D₅, D₆) in the database (2);
- Creation of error patterns (4) from the saved diagnostic messages (D₁, D₂, D₃, D₄, D₅, D₆), which represent a correlation of different diagnostic messages (D₁, D₂, D₃, D₄, D₅, D₆) among the messages saved in relation to an error that occurred, and saving of the error patterns (4) in the database (2);
- Taking of applied measures (M₁, M₂, M₃) to rectify the error that occurred, assignment of the applied measures (M₁, M₂, M₃) to the various error patterns (4) and saving of the applied measures in the database (2);
- Creation of performance evaluations for the individual saved applied measures (M₁, M₂, M₃), wherein a performance evaluation is an indicator of the efficiency of the saved applied measure (M₁, M₂, M₃);
- In the event of the occurrence of a new diagnostic message (Dₓ) coming from at least one of the variety of field devices (F), a comparison is run against the error patterns (4) saved in the database (2) and a suggestion (3) is displayed, indicating at least one measure (Mₓ) to suit the error, as is a performance evaluation if one or more of the error patterns contain(s) the new diagnostic message (Dₓ) that occurred.

2. Procedure as claimed in Claim 1, wherein a potential error is predicted by comparing the new diagnostic message (Dₓ) against the error patterns saved in the database (2).

3. Procedure as claimed in Claim 2, wherein a probable timeframe for the occurrence of the potential error is also predicted.

4. Procedure as claimed in one of the previous claims, wherein the probabilities of success of all the measures (M₁, M₂, M₃) applied for a specific error pattern (4) is determined and displayed in an aggregate manner.

5. Procedure as claimed in Claim 4, wherein the probabilities of success of all the measures (M₁, M₂, M₃) applied for a specific error pattern (4) are determined for various system levels, such as systems of the same application, all systems of a customer, systems of a same application, systems of an industry and/or all available systems, and displayed in an aggregate manner.

6. Procedure as claimed in one of the previous claims, wherein the one of the multiple field devices automatically applies the measure (Mₓ) that suits the new diagnostic message (Dₓ) that occurred.

7. System that is configured to carry out the procedure as claimed in one of the Claims 1 to 6, comprising
- a variety of field devices (F);
- a database (2) for saving the individual device types (1) of the variety of field devices (F), diagnostic messages (D₁, D₂, D₃, D₄, D₅, D₆) coming from the variety of field devices (F), error patterns (4), measures (M₁, M₂, M₃) applied in the past to correct an error that occurred, and performance evaluations for the saved, applied measures (M₁, M₂, M₃);
- a computing unit that accesses the database (2) and can export, save and/or assign data there, and creates performance evaluations and compares new diagnostic messages (Dₓ) with the error patterns saved in the database (2), and displays a suggestion for a measure (Mₓ) to address the error, and an evaluation of the successful performance of the measure.

8. System as claimed in Claim 7, wherein the database (2) is accessible using cloud computing web services.

## Revendications

1. Procédé destiné à la maintenance d'au moins un parmi de multiples appareils de terrain (F) dans une installation de la technique d'automatisation, lequel procédé comprend les étapes suivantes :
- Saisie d'au moins un point de process de l'installation dans une base de données ;
- Attribution d'une application de process au point de process dans la base de données ;
- Saisie de différents types d'appareils (1) attribués au point de process parmi les multiples appareils de terrain (F) et enregistrement des types d'appareil dans la base de données (2) ;
- Saisie de messages de diagnostic (D₁, D₂, D₃, D₄, D₅, D₆) provenant des multiples appareils de terrain (F), attribution des messages de diagnostic (D₁, D₂, D₃, D₄, D₅, D₆) aux différents types d'appareil et enregistrement des messages de diagnostic (D₁, D₂, D₃, D₄, D₅, D₆) dans la base de données (2) ;
- Création de symptômes d'erreur (4) à partir des messages de diagnostic (D₁, D₂, D₃, D₄, D₅, D₆), lesquels représentent une corrélation de différents messages de diagnostic (D₁, D₂, D₃, D₄, D₅, D₆) parmi les messages enregistrés par rapport à une erreur survenue et enregistrement des symptômes d'erreur (4) dans la base de données (2) ;
- Engagement de mesures appliquées (M₁, M₂, M₃) en vue de l'élimination de l'erreur survenue, attribution des mesures appliquées (M₁, M₂, M₃) aux différents symptômes d'erreur (4) et enregistrement des mesures appliquées dans la base de données (2) ;
- Création d'évaluations de l'efficacité pour les différentes mesures appliquées (M₁, M₂, M₃) enregistrées, une évaluation de l'efficacité représentant un degré d'efficacité de la mesure appliquée (M₁, M₂, M₃) respective ;
- En cas d'apparition d'au moins un nouveau message de diagnostic (Dₓ) provenant d'au moins l'un parmi les multiples appareils de terrain (F), il s'ensuit une comparaison avec les symptômes d'erreur (4) enregistrés dans la base de données (2) et l'affichage d'une suggestion (3) d'au moins une mesure (Mₓ) adaptée et de l'évaluation de son efficacité, au cas où l'un ou plusieurs des symptômes d'erreur contient / contiennent le message de diagnostic (Dₓ) nouvellement apparu.

2. Procédé selon la revendication 1, pour lequel une erreur potentielle est prédite au moyen de la comparaison du nouveau message de diagnostic (Dₓ) avec les symptômes d'erreur enregistrés dans la base de données (2).

3. Procédé selon la revendication 2, pour lequel un cadre temporel probable de l'apparition de l'erreur potentielle est prédit.

4. Procédé selon l'une des revendications précédentes, pour lequel les probabilités de succès de toutes les mesures appliquées (M₁, M₂, M₃), relatives à un symptôme d'erreur (4) donné, sont déterminées et affichées de manière groupée.

5. Procédé selon la revendication 4, pour lequel les probabilités de succès de l'ensemble des mesures appliquées (M₁, M₂, M₃), relatives à un symptôme d'erreur (4) donné, sont déterminées et affichées de manière groupée pour différents niveaux de l'installation, comme par exemple les installation de la même application, les installations quelconques d'un client, les installations d'une même application, les installations d'une industrie et/ou l'ensemble des installations disponibles.

6. Procédé selon l'une des revendications précédentes, pour lequel l'un parmi les multiples appareils de terrain applique automatiquement la mesure (Mₓ) adaptée au message de diagnostic (Dₓ) nouvellement apparu.

7. Système configuré pour l'exécution du procédé selon l'une des revendications 1 à 6, comprenant
- une multitude d'appareils de terrain (F) ;
- une base de données (2) destinée à l'enregistrement des différents types d'appareil (1) de la multitude d'appareils de terrain (F), des messages de diagnostic (D₁, D₂, D₃, D₄, D₅, D₆) provenant de la multitude d'appareils de terrain (F), des symptômes d'erreur (4), des mesures (M₁, M₂, M₃) appliquées dans le passé en vue de l'élimination d'une erreur survenue et des évaluations de l'efficacité pour les différentes mesures appliquées (M₁, M₂, M₃) enregistrées ;
- une unité de calcul, qui accède à la base de données (2) et qui peut y lire, enregistrer et/ou attribuer des données, et qui crée des évaluations de l'efficacité et compare les nouveaux messages de diagnostic (Dₓ) avec les symptômes d'erreur enregistrés dans la base de données (2), et affiche une suggestion d'une mesure (Mₓ) adaptée et son évaluation de l'efficacité.

8. Système selon la revendication 7, pour lequel la base de données (2) est accessible au moyen de services Web de cloud computing.
